# EUROPÄISCHE PATENTSCHRIFT

(11) **EP 3 704 395 B1**
(45) Veröffentlichungstag und Bekanntmachung des Hinweises auf die Patenterteilung: **22.09.2021**
(21) Anmeldenummer: 18819256.1
(22) Anmeldetag: 30.10.2018
(51) Int. Cl.: F16D 65/00, F16D 55/226

(54) **BREMSSATTEL FÜR EINE SCHEIBENBREMSE UND VERFAHREN ZUM HERSTELLEN EINES BREMSSATTELS**
BRAKE CALIPER FOR A DISK BRAKE AND METHOD FOR PRODUCING A BRAKE CALIPER
ÉTRIER DE FREIN POUR UN FREIN À DISQUE ET PROCÉDÉ DE FABRICATION D'UN ÉTRIER DE FREIN

(30) Priorität: 31.10.2017 AT 509082017
(43) Veröffentlichungstag der Anmeldung: 09.09.2020
(73) Patentinhaber: STIWA Automation GmbH, 4800 Attnang-Puchheim (AT)
(72) Erfinder: GRAUSGRUBER, Klaus, 4691 Breitenschützing (AT)
(74) Vertreter: Burger, Hannes
(86) Internationale Anmeldenummer: PCT/AT2018/060262
(87) Internationale Veröffentlichungsnummer: WO 2019/084588

(56) Entgegenhaltungen:
- EP-A1- 0 108 680
- EP-A1- 0 359 548
- DE-A1-102015 002 543
- DE-A1-102016 204 607
- DE-U- 1 962 739
- JP-A- S56 105 130

## Beschreibung

Die Erfindung betrifft einen Bremssattel für eine Scheibenbremse, sowie ein Verfahren zum Herstellen des Bremssattels.

Aus dem Stand der Technik sind verschiedenste Bremssättel bekannt, die in einem Gussverfahren hergestellt werden.

Aus der DE 32 45 157 A1 ist ein Bremssattel bekannt, der zwei Gussteile aufweist, welche aneinandergeschweißt sind.

Aus der DE 1962739 U, der DE 10 2015 002543A1, der DE 102016204607 A1 und der EP 0 108 680 A1 sind weitere Bremssättel bekannt.

Die aus dem Stand der Technik bekannten Bremssättel weisen den Nachteil auf, dass sie ein hohes Gewicht haben.

Aufgabe der vorliegenden Erfindung war es, die Nachteile des Standes der Technik zu überwinden und einen Bremssattel und ein Verfahren zum Herstellen eines Bremssattels zur Verfügung zu stellen, welche eine verbesserte Bauweise aufweisen.

Diese Aufgabe wird durch einen Bremssattel und ein Verfahren gemäß den Ansprüchen gelöst.

Erfindungsgemäß ist ein Bremssattel für eine Scheibenbremse ausgebildet. Der Bremssattel umfasst:
- einen ersten Sattelschenkel mit einem Kolbengehäuse zur Aufnahme eines Bremskolbens;
- einen zweiten Sattelschenkel, welcher dem ersten Sattelschenkel gegenüberliegend angeordnet ist;
- einen Verbindungssteg, der die beiden Sattelschenkel miteinander verbindet.

Der Bremssattel weist mehrere Einzelteile auf, welche mittels einer Schweißverbindung miteinander gekoppelt sind.

Der erfindungsgemäße Bremssattel weist den Vorteil auf, dass dieser einfach und kostengünstig herzustellen ist. Darüber hinaus kann beim erfindungsgemäßen Bremssattel gegenüber herkömmlichen Bremssättel, welche gegossen sind bzw. welche aus Gussteilen zusammengefügt sind, Material eingespart werden, sodass der erfindungsgemäße Bremssattel eine geringere Masse aufweisen kann. Dieser Vorteil kann durch die erfindungsgemäße Schweißkonstruktion erreicht werden.

Der erfindungsgemäße Bremssattel weist insbesondere den Vorteil auf, dass ein Stanzbiegeteil kann genauer gefertigt werden kann, als ein Gussteil. Somit kann die Bauteilgenauigkeit erhöht werden. Außerdem kann die Steifigkeit bzw. die Festigkeit eines Stanzbiegeteils bei gleicher Kubatur durch die genauere Fertigung höher sein, als die Steifigkeit bzw. die Festigkeit eines Gußteils.

Gemäß der Erfindung sind der erste Sattelschenkel, der zweite Sattelschenkel und der Verbindungssteg jeweils aus zumindest einem Einzelteil gebildet, wobei der erste Sattelschenkel und der zweite Sattel schenkel mittels einer Schweißverbindung mit dem Verbindungssteg gekoppelt sind. Durch diese Maßnahme können der erste Sattelschenkel und der zweite Sattelschenkel exakt relativ zueinander positioniert werden.

Der Verbindungssteg weist einzelne Stegelemente auf, welche sich jeweils vom ersten Sattelschenkel zum zweiten Sattelschenkel erstrecken, wobei die Stegelemente jeweils einteilig ausgebildet sind. Einteilig ausgebildete Stegelemente bringen den Vorteil mit sich, dass diese eine erhöhte Festigkeit aufweisen. Da die Stegelemente unter höchster Belastung stehen und ein sicherheitsrelevantes Bauteil sind, ist es unbedingt notwendig, dass diese eine gute Ausfallssicherheit aufweisen. Dies kann nur durch die einteilige Ausführung erreicht werden. Natürlich können weitere Bauteile mit den Stegelementen verschweißt sein, es ist jedoch von überraschendem Vorteil, wenn die Stegelemente sich jeweils zwischen dem ersten Sattelschenkel und dem zweiten Sattel schenkel erstrecken und in diesem Bereich nicht aus mehreren Teilen zusammengesetzt sind, welche durch eine Schweißnaht oder durch eine sonstige Fügeverbindung miteinander gekoppelt sind.

Weiters kann es zweckmäßig sein, wenn die Position des ersten Sattelschenkels zum Verbindungssteg, insbesondere zu den Stegelementen, durch einen Axialanschlag festgelegt ist und dass die Position des zweiten Sattelschenkels zum Verbindungssteg, insbesondere zu den Stegelementen, frei festgelegt ist. Durch diese Maßnahme kann erreicht werden, dass die Fertigungstoleranzen der Stegelemente beim Verschweißen des zweiten Sattelschenkels mit den Stegelementen ausgeglichen werden kann. Unter frei festgelegt wird verstanden, dass die Position des zweiten Sattelschenkels zum Verbindungssteg nicht durch einen formschlüssigen Anschlag definiert ist, sondern dass der zweite Sattelschenkel und der Verbindungssteg in Axialrichtung frei zueinander positionierbar sind und die Position des zweiten Sattelschenkels zum Verbindungssteg erst durch eine Schweißverbindung der beiden Bauteile miteinander festgelegt wird.

Ferner kann vorgesehen sein, dass zumindest eines der Einzelteile des Bremssattels aus einem ebenen Blechstück ausgeschnitten oder ausgestanzt ist. Dies bringt den Vorteil mit sich, dass die Einzelteile des Bremssattels einfach und kostengünstig gefertigt werden können und darüber hinaus eine hohe Festigkeit aufweisen können.

Darüber hinaus kann vorgesehen sein, dass zumindest eines der aus einem ebenen Blechstück ausgeschnittenen oder ausgestanzten Einzelteile des Bremssattels, umgeformt ist. Durch diese Maßnahme können die Einzelteile in deren Formgebung an die jeweiligen Erfordernisse angepasst werden. Insbesondere kann vorgesehen sein, dass zur Umformung der Einzelteile ein Biegeverfahren bzw. ein Tiefziehverfahren eingesetzt wird.

Vorteilhaft ist auch eine Ausprägung, gemäß welcher vorgesehen sein kann, dass ein Mantel des Kolbengehäuses des ersten Sattelschenkels aus einem Formrohr gefertigt ist. Derartige Formrohre können kostengünstig hergestellt werden und darüber hinaus eine hohe Formgenauigkeit aufweisen.

Gemäß einer Weiterbildung ist es möglich, dass an einer Stirnseite des Mantels des Kolbengehäuses ein Verschlussdeckel angeschweißt ist. Durch diese Maßnahme kann das Kolbengehäuse verschlossen werden.

Ferner kann es zweckmäßig sein, wenn der Verschlussdeckel mittels einer Widerstandsschweißung am Mantel angeschweißt ist. Besonders mittels einer Widerstandsschweißung kann erreicht werden, dass die Schweißverbindung zwischen dem Mantel und dem Verschlussdeckel dicht ist und somit ein Druckraum zur Betätigung des Kolbens ausgebildet werden kann.

In einer Alternativvariante kann vorgesehen sein, dass das Kolbengehäuse des ersten Sattelschenkels als Tiefziehteil ausgebildet ist. Dies bringt den Vorteil mit sich, dass der Mantel und der Verschlussdeckel aus einem Blech gebildet sind und somit eine dichte Verbindung zwischen Mantel und Verschlussdeckel gewährleistet ist. Bei einer derartigen Ausführungsvariante kann das Kolbengehäuse einteilig ausgebildet sein.

Weiters kann vorgesehen sein, dass an der Mantelaußenfläche des Kolbengehäuses zumindest eine radial abstehende Lasche angeschweißt ist. Eine derartige Lasche kann beispielsweise zum Befestigen des Bremssattels am Federbein dienen. Insbesondere kann vorgesehen sein, dass die Lasche ebenfalls aus einem Blechteil geformt ist.

Gemäß einer besonderen Ausprägung ist es möglich, dass zwischen 50% und 100%, insbesondere zwischen 70% und 100%, der mittels der Schweißverbindung miteinander gekoppelten Einzelteile des Bremssattels aus einem Halbzeug gebildet sind. Dies bringt den Vorteil mit sich, dass die Einzelteile des Bremssattels einfach miteinander gekoppelt werden können. Mit anderen Worten ausgedrückt kann vorgesehen sein, dass zwischen 50 % und 100 %, insbesondere zwischen 70 % und 100 %, der Einzelteile des Bremssattels nicht als Gussteil ausgebildet sind.

Entsprechend einer vorteilhaften Weiterbildung kann vorgesehen sein, dass zumindest zwei der miteinander verschweißten Einzelteile des Bremssattels aus einem unterschiedlichen Werkstoff gebildet sind. Dies bringt den Vorteil mit sich, dass in einem Bremssattel verschiedene Werkstoffe mit verschiedenen Werkstoffeigenschaften verwendet werden können. Dadurch kann die Festigkeit bzw. die Steifigkeit des Bremssattels lokal beeinflusst werden. Beispielsweise kann die Festigkeit des Materials der Stegelemente größer sein, als die Festigkeit des Materials des Kolbengehäuses.

Insbesondere kann es vorteilhaft sein, wenn der Mantel des Kolbengehäuses eine zylindrische Mantelaußenfläche aufweist. Dadurch können die Laschen einfach an der Mantelaußenfläche angeschweißt werden.

Weiters kann vorgesehen sein, dass der Mantel des Kolbengehäuses als Hohlzylinder ausgebildet ist.

Femer kann es zweckmäßig sein, wenn die Schenkelplatte eine konstante Wandstärke aufwei st.

Außerdem kann vorgesehen sein, dass die Stegelemente eine konstante Wandstärke aufweisen.

Darüber hinaus kann vorgesehen sein, dass die Laschen eine konstante Wandstärke aufweisen.

Alternativ dazu kann die Wandstärke der einzelnen Bauteile auch variabel sein. Dies kann beispielsweise dadurch erreicht werden, dass Bleche mit verschiedener Wandstärke zusammengeschweißt werden.

Ferner kann vorgesehen sein, dass die Stegelemente mit Versteifungsrippen versehen sind.

Außerdem kann vorgesehen sein, dass zwei der Stegelemente gleich ausgebildet sind und dass diese beiden Stegelemente in einem Abstand zueinander symmetrisch bezüglich einer Mittelebene am Bremssattel angeordnet sind.

Ferner kann vorgesehen sein, dass zumindest eines der Stegelemente im Bereich des zweiten Sattelschenkels eine Anschweißnase aufweist, welche eine größere Ausdehnung aufweist, als ein Steghauptbereich. Insbesondere kann vorgesehen sein, dass das Stegelement im Bereich der Anschweißnase mit der Schenkelplatte verschweißt ist.

Erfindungsgemäß ist auch ein Verfahren zum Herstellen eines Bremssattels vorgesehen. Das Verfahren umfasst folgende Verfahrensschritte:
- Bereitstellen von mehreren Einzelteilen;
- Verschweißen der Einzelteile miteinander, sodass der aus den Einzelteilen zusammengeschweißte Bremssattel - einen ersten Sattelschenkel mit einem Kolbengehäuse zur Aufnahme eines Bremskolbens; - einen zweiten Sattelschenkel, welcher dem ersten Sattelschenkel gegenüberliegend angeordnet ist; und - einen Verbindungssteg, der die beiden Sattelschenkel miteinander verbindet, aufweist.

Das erfindungsgemäße Verfahren weist den Vorteil auf, dass dadurch ein verbesserter Bremssattel hergestellt werden kann.

Der erste Sattelschenkel, der zweite Sattelschenkel und der Verbindungssteg sind jeweils aus zumindest einem Einzelteil gebildet, wobei der erste Sattelschenkel und der zweite Sattelschenkel in einer Spannaufnahme derart aufgenommen werden, dass deren Relativposition zueinander festgesetzt ist, und die beiden Sattelschenkel anschließend mittels des Verbindungssteges miteinander verschweißt werden. Dies bringt den Vorteil mit sich, dass der erste Sattelschenkel und der zweite Sattelschenkel exakt relativ zueinander positioniert werden und anschließend durch die Schweißverbindung diese exakte Position der beiden Sattelschenkel relativ zueinander fixiert wird.

Weiters kann vorgesehen sein, dass einzelne Stegelemente des Verbindungssteges, welche j e-weils einteilig ausgebildet sind, an einem Axialanschlag am ersten Sattelschenkel angelegt und mit diesem verschweißt werden und in einem anschließenden Verfahrensschritt der zweite Sattelschenkel in einem definierten Abstand axial frei verschiebbar an den Stegelementen angelegt wird und mit diesen verschweißt wird.

Gemäß einer Weiterbildung ist es möglich, dass das Kolbengehäuse durch Tiefziehen hergestellt wird. Durch diese Maßnahme kann das Kolbengehäuse einfach hergestellt werden und kann darüber hinaus eine hohe Dichtheit aufweisen.

Ferner kann es zweckmäßig sein, wenn das Kolbengehäuse vor dem Verbinden mit dem zweiten Sattelschenkel einer Druckprüfung unterzogen wird. Durch diese Maßnahme kann die Dichtheit des Kolbengehäuses kontrolliert werden.

Darüber hinaus kann vorgesehen sein, dass der Bremssattel nach dem Verschweißen der Einzelteile in ein elektrolytisches Bad getaucht wird, um die Oberfläche zu galvanisieren. Durch diese Maßnahme kann eine Korrosionsbeständigkeit des Bremssattels erreicht werden.

Weiters kann vorgesehen sein, dass der Verbindungssteg aus mehreren Einzelteilen zusammengeschweißt wird, welche mittels einem Trennverfahren, wie etwa Laserschneiden oder Wasserstrahlschneiden, aus einem Blech herausgeschnitten wurden.

Gemäß einer besonderen Ausprägung ist es möglich, dass eine Schenkelplatte des zweiten Sattelschenkels mittels einem Trennverfahren aus einem Blechstück ausgeschnitten wird.

In einer Ausführungsvariante kann vorgesehen sein, dass der Bremskolben vor dem Verschweißen des Kolbengehäuses mit den restlichen Einzelteilen in das Kolbengehäuse eingesetzt wird. Mit anderen Worten ausgedrückt kann das Kolbengehäuse vor dem Verschweißen mit weiteren Bauteilen zusammengesetzt werden, bzw. mit den innenliegenden Bauteilen ausgestattet werden.

Der erfindungsgemäße Bremssattel kann an einem Kraftfahrzeug angeordnet sein.

Alternativ dazu kann vorgesehen sein, dass der erfindungsgemäße Bremssattel in einem Schienenfahrzeug verbaut ist.

In einem ersten Ausführungsbeispiel kann vorgesehen sein, dass der Bremssattel als Schwimmsattel ausgebildet ist. Hierbei ist der Bremssattel mittels der Laschen mit Führungsstangen verbunden sein, über welche er relativ zur Bremsscheibe verschiebbar an der Radaufhängung angeordnet ist. Beim Schwimmsattel ist nur am ersten Sattelschenkel ein Kolbengehäuse ausgebildet. Natürlich können am ersten Sattelschenkel auch mehrere Kolbengehäuse vorgesehen sein.

In einem zweiten Ausführungsbeispiel kann vorgesehen sein, dass der Bremssattel als Festsattel ausgebildet ist. Hierbei ist der Bremssattel fix und relativ zur Bremsscheibe unverschiebbar an der Radaufhängung angeordnet. Beim Festsattel ist am ersten Sattelschenkel und am zweiten Sattelschenkel ein Kolbengehäuse ausgebildet. Natürlich kann auch vorgesehen sein, dass am ersten Sattelschenkel und am zweiten Sattelschenkel jeweils mehrere Kolbengehäuse ausgebildet sind.

Der Bremssattel wirkt im zusammengebauten Zustand mit einer Bremsscheibe einer Scheibenbremse zusammen. Insbesondere dient der Bremssattel zur Aufnahme von Bremsbelägen, welche beim Bremsen an die Bremsscheibe angepresst werden.

Halbzeuge sind vorgefertigte Rohmaterialformen bzw. Werkstücke und Halbfabrikate der einfachsten Form. Sie bestehen in der Regel aus einem einzelnen Rohmaterial, welches lediglich in eine grundlegende geometrische Form gebracht wurde. Als Halbzeuge werden beispielsweise Profile, Stangen, Rohre und Platten bzw. Bleche verstanden. Als Halbzeuge werden jedoch nicht unmittelbar durch das Gießen entstandene Einzelteile verstanden.

Die Einzelteile des Bremssattels können aus verschiedensten Werkstoffen gebildet sein. Beispielsweise kann vorgesehen sein, dass zumindest einzelne der Einzelteile des Bremssattels aus einem rostfreien Stahl mit einem Chromgehalt höher 10,5 Gewichts-% ausgebildet sind. Dies bringt den Vorteil mit sich, dass der Bremssattel nicht rostet.

Weiters ist es denkbar, dass zumindest einzelne der Einzelteile des Bremssattels aus einem Stahl mit einem Kohlenstoffgehalt höher 0,35 Gewichts-% ausgebildet sind.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines Ausführungsbeispiels eines Bremssattels, welcher als Schwimmsattel ausgebildet ist;
- Fig. 2: eine Draufsicht auf einen Bremssattel;
- Fig. 3: eine perspektivische Ansicht einer Schenkelplatte;
- Fig. 4: eine perspektivische Ansicht eines Stegelementes;
- Fig. 5: eine Querschnittansicht eines ersten Ausführungsbeispiels eines Kolbengehäuses;
- Fig. 6: ein Ausführungsbeispiel einer Gliederung während dem Zusammenbau des Bremssattels;
- Fig. 7: eine Querschnittansicht eines Ausführungsbeispiels eines tiefgezogenen Kolbengehäuses;
- Fig. 8: eine Seitenansicht eines weiteren Ausführungsbeispiels eines Bremssattels, welcher als Festsattel ausgebildet ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

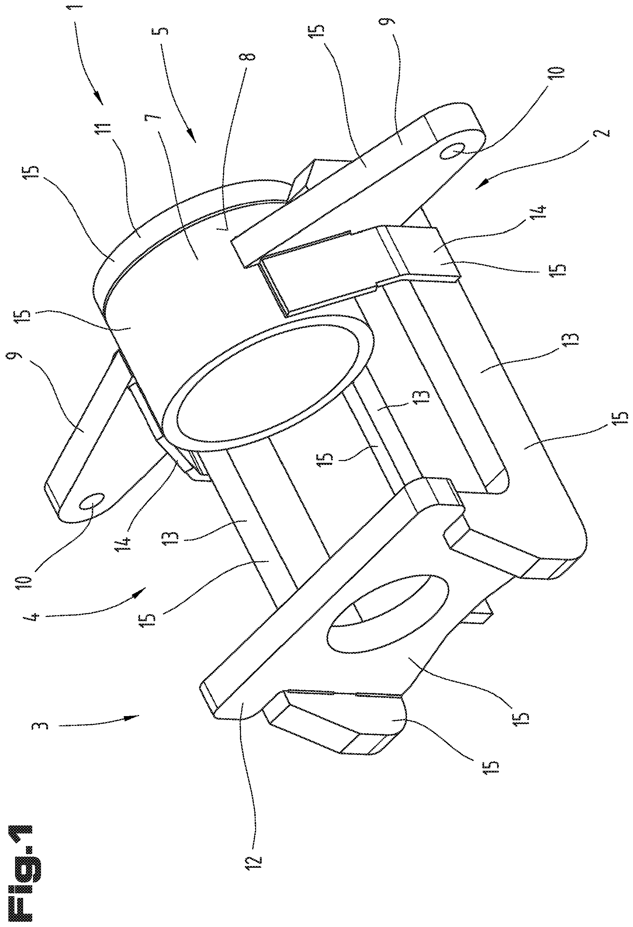

Fig. 1 zeigt ein Ausführungsbeispiel eines Bremssattels 1 für eine Scheibenbremse.

Der Bremssattel 1 weist einen ersten Sattelschenkel 2 und einen zweiten Sattelschenkel 3 auf, welche mittels einem Verbindungssteg 4 miteinander gekoppelt sind. Der erste Sattelschenkel 2 weist ein Kolbengehäuse 5 zur Aufnahme eines Bremskolbens 6 auf.

Das Kolbengehäuse 5 weist einen Mantel 7 auf, welcher hohlzylindrisch ausgebildet ist und in welchem der Bremskolben 6 aufgenommen ist. An einer Mantelaußenfläche 8 des Mantels 7 sind im vorliegenden Ausführungsbeispiel zwei Laschen 9 zur schwimmenden Aufnahme des Bremssattels 1 an einer Radaufhängung angeordnet. Die Laschen 9 sind hierbei mittels einer Schweißverbindung am Mantel 7 befestigt.

Wie aus Fig. 1 ersichtlich, kann vorgesehen sein, dass die Laschen 9 aus einem ebenen Blechteil ausgeschnitten sind. Weiters kann vorgesehen sein, dass die Laschen 9 ein Durchgangsloch 10 zur schwimmenden Befestigung des Bremssattels 1 an einer Radaufhängung aufweisen. Der Bremssattel 1 des vorliegenden Ausführungsbeispiels gemäß Fig. 1 ist als Schwimmsattel ausgebildet. Ein derartiger Schwimmsattel weist nur am ersten Sattelschenkel 2 einen oder mehrere Bremskolben 6 auf.

Durch die schwimmende Aufhängung des Bremssattels 1 über die Laschen 9, zentriert sich der Bremssattel 1 beim Aufbringen der Bremskraft, sodass sowohl der Bremsbelag des ersten Sattelschenkels 2 als auch der Bremsbelag des zweiten Sattelschenkels 3 an der Bremsscheibe anliegt bzw. auf diese einwirkt.

Wie aus Fig. 1 weiters ersichtlich, kann vorgesehen sein, dass das Kolbengehäuse 5 einen Verschlussdeckel 11 aufweist, welcher mittels einer Schweißverbindung am Mantel 7 angeordnet ist. Als Schweißverbindung zwischen dem Mantel 7 und dem Verschlussdeckel 11 kann eine Laserschweißverbindung vorgesehen sein. In einer Alternativvariante kann als Schweißverbindung zwischen dem Mantel 7 und dem Verschlussdeckel 11 eine Widerstandsschweißverbindung vorgesehen sein.

In wieder einer anderen Alternativvariante kann zum Verbinden des Mantels 7 mit dem Verschlussdeckel 11 ein Rotationsreibschweißverfahren eingesetzt werden. Hierbei wird der Mantel 7 und/oder der Verschlussdeckel 11 mit einer vorbestimmten Drehzahl rotiert und die beiden Teile werden mit einem vorbestimmten Druck aneinander gepresst.

Der zweite Sattelschenkel 3 umfasst im Wesentlichen eine Schenkelplatte 12, welche als Anlage für einen Bremsbacken dient. Die Schenkelplatte 12 kann ebenfalls mittels einer Schweißverbindung mit dem Verbindungssteg 4 gekoppelt sein. Hier wird vorzugsweise ein Laserschweißverfahren verwendet.

Der Verbindungssteg 4 weist mehrere Stegelemente 13 auf, welche sich zwischen dem ersten Sattelschenkel 2 und dem zweiten Sattelschenkel 3 erstrecken.

Weiters kann vorgesehen sein, dass zwei der Stegelemente 13 eine identische Formgebung aufweisen und in einem Abstand zueinander beabstandet sind.

Wie aus Fig. 1 ersichtlich, sind die einzelnen Stegelemente 13 im Bereich des zweiten Sattelschenkels 3 jeweils mit der Schenkelplatte 12 verschweißt.

Außerdem sind die einzelnen Stegelemente 13 im Bereich des ersten Sattelschenkels 2 jeweils mit den Laschen 9 und/oder mit dem Kolbengehäuse 5 verschweißt.

Wie aus Fig. 1 ersichtlich, können darüber hinaus Versteifungselemente 14 vorgesehen sein, welche an der Mantelaußenfläche 8 des Mantels 7 und/oder an der Lasche 9 und/oder jeweils an einem der Stegelemente 13 angeschweißt sind.

Die Schenkelplatte 12, die Stegelemente 13, der Mantel 7, der Verschlussdeckel 11, die Laschen 9, die Versteifungselemente 14 und alle sonstigen separat gefertigten Elemente des Bremssattels 1 können auch als Einzelteile 15 bezeichnet werden, aus welchen der Bremssattel 1 zusammengesetzt ist.

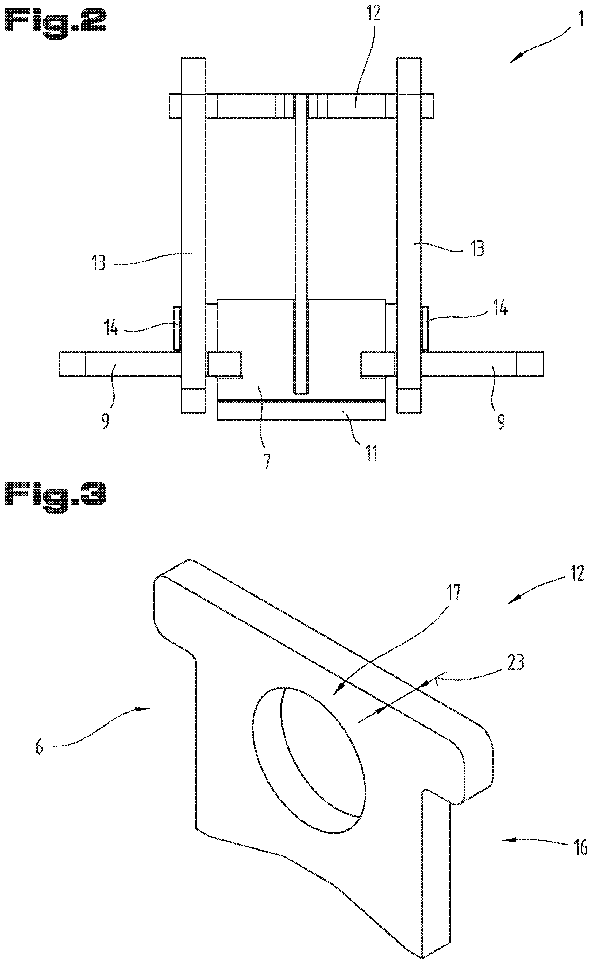

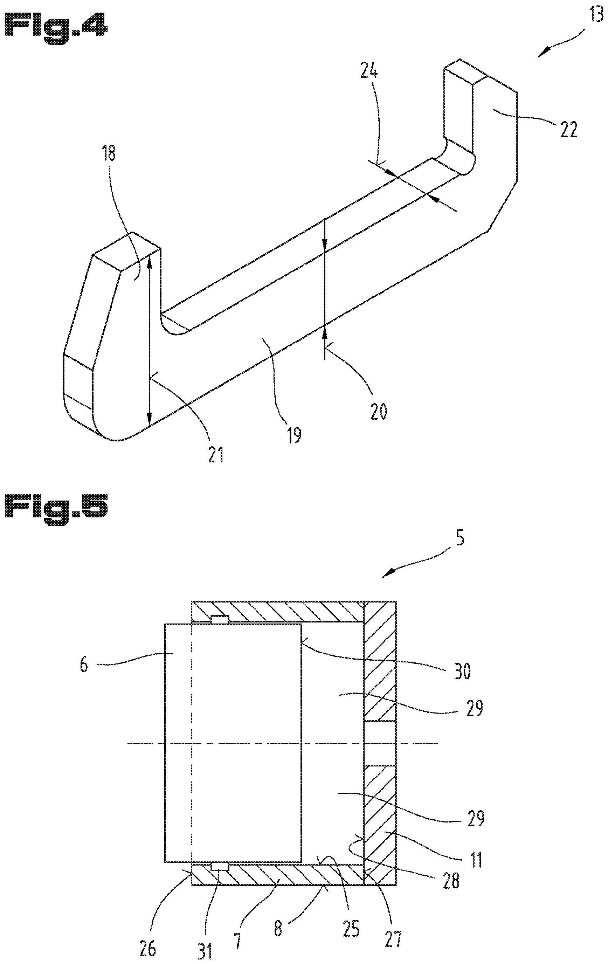

Fig. 3 zeigt eine perspektivische Ansicht eines der Stegelemente 13. In Fig. 4 ist eines der äußeren Stegelemente 13 dargestellt, welche ident ausgeführt sind. Der genaue Aufbau der Schenkelplatte 12 bzw. der Stegelemente 13 wird anhand einer Zusammenschau der Fig. 1, 3 und 4 beschrieben.

Wie aus den Figuren ersichtlich, kann vorgesehen sein, dass die Schenkelplatte 12 T-förmig ausgebildet ist. Hierbei können an der Schenkelplatte 12 zwei Ausnehmungen 16 vorgesehen sein, welche zur Aufnahme der Stegelemente 13 dienen. Weiters kann in der Schenkelplatte 12 ein zentrales Loch 17 ausgebildet sein.

Das Stegelement 13 kann eine Anschweißnase 18 aufweisen, welche an einen Steghauptbereich 19 anschließt. Die Ausnehmung 16 der Schenkelplatte 12 kann derart ausgebildet sein, dass die Anschweißnase 18 des Stegelementes 13 damit korrespondiert bzw. darin aufgenommen werden kann. Insbesondere kann hierbei vorgesehen sein, dass das Stegelement 13 im Bereich der Ausnehmung 16 der Schenkelplatte 12 platziert wird und diese beiden Bauteile miteinander verschweißt werden.

Der Steghauptbereich 19 kann eine Steghöhe 20 aufweisen, welche geringer ist als eine Steghöhe 21 im Bereich der Anschweißnase 18. Das Stegelement 13 kann darüber hinaus eine weitere Anschweißnase 22 aufweisen, welche im zusammengeschweißten Zustand des Bremssattels 1 mit den Laschen 9 korrespondiert.

Eine Materialstärke 23 der Schenkelplatte 12 kann größer sein als eine Material stärke 24 des Stegelementes 13.

In einem weiteren Ausführungsbeispiel kann die Materialstärke 23 der Schenkelplatte 12 auch gleich groß sein wie die Materialstärke 24 des Stegelementes 13.

Fig. 5 zeigt eine Schnittansicht durch ein Kolbengehäuse 5 wie es im Ausführungsbeispiel nach Fig. 1 verbaut ist. Wie aus Fig. 5 ersichtlich, weist der Mantel 7 neben der Mantelaußenfläche 8 eine Mantelinnenfläche 25 auf, in welcher der Bremskolben 6 aufgenommen ist. Der Bremskolben 6 kann gegenüber einer ersten Stirnseite 26 des Mantels 7 vorragen bzw. derart im Mantel 7 aufgenommen sein, dass er gegenüber der ersten Stirnseite 26 nach vor verschoben werden kann.

Die zweite Stirnseite 27 des Mantels 7 kann an einer ersten Stirnseite 28 des Verschlussdeckels 11 anliegen. Ein Druckraum 29 des Bremskolbens 6 wird durch die erste Stirnseite 28 des Verschlussdeckels 11, durch die Mantelinnenfläche 25 des Mantels 7 und durch eine erste Stirnseite 30 des Bremskolbens 6 begrenzt.

Optional kann in der Mantelinnenfläche 25 des Mantels 7 eine Ringnut 31 ausgebildet sein, in welcher Dichtmanschetten zur Abdichtung des Bremskolbens 6 aufgenommen sein können.

Die Ringnut 31 kann vor dem Verbinden des Mantels 7 mit den weiteren Bauteilen in diesen eingebracht werden.

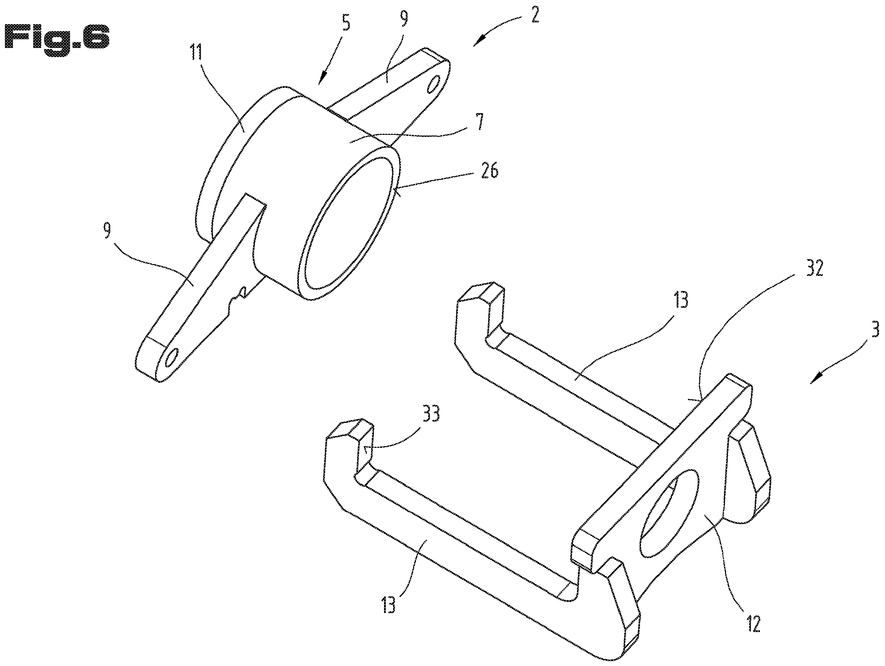

In Fig. 6 sind die möglichen Verfahrensschritte zum Zusammenbau des Bremssattels 1 in einem ersten Ausführungsbeispiel dargestellt.

Wie aus Fig. 6 ersichtlich, kann vorgesehen sein, dass das Kolbengehäuse 5 vorgefertigt wird, indem der Verschlussdeckel 11 auf den Mantel 7 aufgeschweißt bzw. an diesem Befestigt wird. Anschließend können die Laschen 9 an der Mantelaußenfläche 8 des Mantels 7 angeschweißt werden.

Hierbei können die einzelnen Teile jeweils relativ zueinander positioniert werden und mittels einem Schweißverfahren, insbesondere einem Laserschweißverfahren, miteinander verschweißt werden. Getrennt davon kann die Schenkelplatte 12 des zweiten Sattelschenkels 3 mit den Stegelementen 13 verschweißt werden. Hierbei können ebenfalls die Einzelteile in einer Aufspannvorrichtung aufgenommen werden und anschließend mittels einem Laserschweißverfahren miteinander verschweißt werden.

In einem weiteren Verfahrensschritt können anschließend der erste Sattelschenkel 2 und der zweite Sattelschenkel 3 miteinander verschweißt werden. Wichtig ist hierbei, dass der erste Sattelschenkel 2 und der zweite Sattelschenkel 3 derart zueinander positioniert werden, dass das Kolbengehäuse 5 relativ zur Schenkelplatte 12 eine möglichst genaue Position aufweist. Um dies zu erreichen, kann vorgesehen sein, dass die erste Stirnseite 26 des Mantels 7 des Kolbengehäuses 5 an eine erste Referenzfläche einer Spannvorrichtung angepresst wird und eine Innenfläche 32 der Schenkelplatte 12 an eine zweite Referenzfläche der Spannvorrichtung angepresst wird. Anschließend können der erste Sattelschenkel 2 und der zweite Sattelschenkel 3 miteinander verschweißt werden. Durch diese Maßnahme kann erreicht werden, dass die erste Stirnseite 26 des Mantels 7 und die Innenfläche 32 der Schenkelplatte 12 exakt zueinander positioniert werden.

In einem alternativen Fertigungsverfahren kann vorgesehen sein, dass zuerst der erste Sattelschenkel 2 mit den einzelnen Stegelementen 13 verschweißt wird, wobei der erste Sattelschenkel 2 an einem Axialanschlag 33 der einzelnen Stegelemente 13 positioniert wird. In einem anschließenden Verfahrensschritt kann der zweite Sattelschenkel 3 mit den einzelnen Stegelementen 13 verschweißt werden, wobei der zweite Sattelschenkel 3 in einem definierten Abstand an den Stegelementen 13 angelegt wird und mit diesen verschweißt wird. Die Stegelemente 13 bzw. der zweite Sattelschenkel 3 sind derart ausgebildet, dass die Axialposition des zweiten Sattelschenkels 3 relativ zu den Stegelementen 13 vor der Fixierung durch die Schweißverbindung frei festgelegt werden kann.

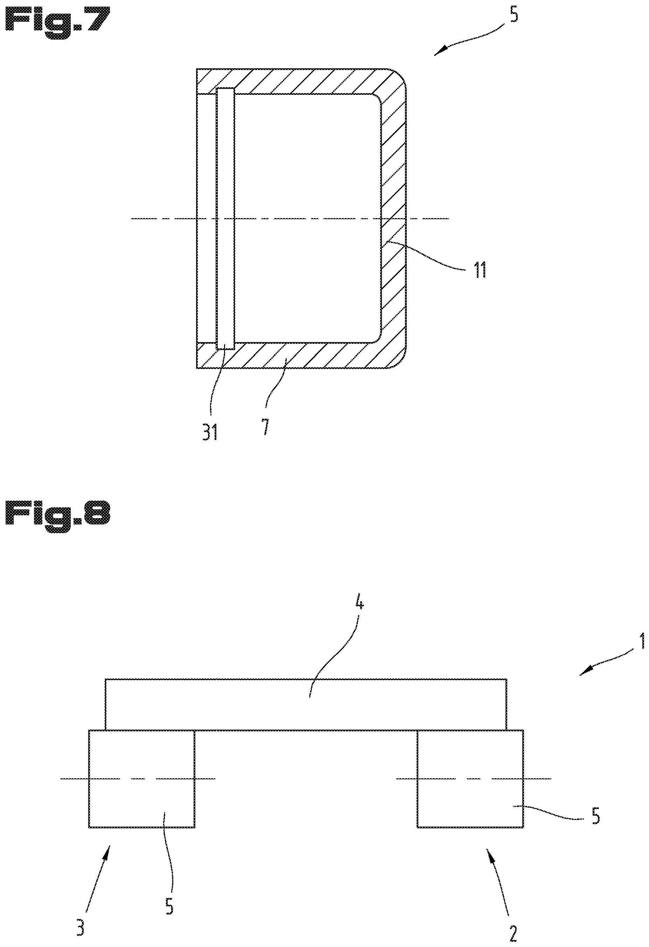

Fig. 7 zeigt ein weiteres Ausführungsbeispiel des Kolbengehäuses 5. Wie aus Fig. 7 ersichtlich, kann vorgesehen sein, dass das Kolbengehäuse 5 als Kaltumformteil ausgebildet ist. Die Kaltumformung kann beispielsweise durch Tiefziehen erreicht werden. Alternativ dazu ist es auch denkbar, dass die Kaltumformung durch Fließpressen erreicht wird. In wieder einer anderen Ausführungsvariante ist es auch denkbar, dass die Kaltumformung durch Taumelpressen erreich wird.

Bei einem derartigen Ausführungsbeispiel des Kolbengehäuses 5, welches durch Kaltumformung hergestellt wird, sind der Mantel 7 und der Verschlussdeckel 11 aus einem Blechteil geformt.

Fig. 8 zeigt ein weiteres Ausführungsbeispiel des Bremssattels 1. Wie aus Fig. 8 ersichtlich, kann vorgesehen sein, dass der Bremssattel 1 als Festsattel ausgebildet ist, welcher sowohl am ersten Sattelschenkel 2 als auch am zweiten Sattel schenkel 3 zumindest ein Kolbengehäuse 5 aufweist. Die beiden Kolbengehäuse 5 können hierbei ebenfalls mittels einem Verbindungssteg 4 miteinander gekoppelt sein. Die Kolbengehäuse 5 können wie in den vorherigen Ausführungsbeispielen beschrieben, ausgebildet sein. Weiters kann vorgesehen sein, dass die Einzelteile 15 eines derartigen Bremssattels 1 ebenfalls aus Halbzeugen gebildet sind.

Bei allen beschriebenen Ausführungsbeispielen kann vorgesehen sein, dass am ersten Sattelschenkel 2 ein oder mehrere Kolbengehäuse 5 ausgebildet sind. Analog dazu kann vorgesehen sein, dass am zweiten Sattelschenkel 3 ein oder mehrere Kolbengehäuse 5 ausgebildet sind.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Bremssattel | 31 | Ringnut |
| 2 | erster Sattelschenkel | 32 | Innenfläche Schenkelplatte |
| 3 | zweiter Sattelschenkel | 33 | Axialanschlag |
| 4 | Verbindungssteg | | |
| 5 | Kolbengehäuse | | |
| 6 | Bremskolben | | |
| 7 | Mantel | | |
| 8 | Mantelaußenfläche | | |
| 9 | Lasche | | |
| 10 | Durchgangsloch | | |
| 11 | Verschlussdeckel | | |
| 12 | Schenkelplatte | | |
| 13 | Stegelement | | |
| 14 | Versteifungselement | | |
| 15 | Einzelteil | | |
| 16 | Ausnehmung | | |
| 17 | Loch | | |
| 18 | Anschweißnase | | |
| 19 | Steghauptbereich | | |
| 20 | Steghöhe Steghauptbereich | | |
| 21 | Steghöhe Anschweißnase | | |
| 22 | weitere Anschweißnase | | |
| 23 | Materialstärke Schenkelplatte | | |
| 24 | Materialstärke Stegelement | | |
| 25 | Mantelinnenfläche | | |
| 26 | erste Stirnseite Mantel | | |
| 27 | zweite Stirnseite Mantel | | |
| 28 | erste Stirnseite Verschlussdeckel | | |
| 29 | Druckraum | | |
| 30 | erste Stirnseite Kolben | | |

## Patentansprüche

1. Bremssattel (1) für eine Scheibenbremse, der Bremssattel (1) umfassend:
- einen ersten Sattelschenkel (2) mit einem Kolbengehäuse (5) zur Aufnahme eines Bremskolbens (6);
- einen zweiten Sattelschenkel (3), welcher dem ersten Sattelschenkel (2) gegenüberliegend angeordnet ist;
- einen Verbindungssteg (4), der die beiden Sattelschenkel (2, 3) miteinander verbindet, wobei der Bremssattel (1) mehrere Einzelteile (15) aufweist, welche mittels einer Schweißverbindung miteinander gekoppelt sind, **dadurch gekennzeichnet, dass** der erste Sattelschenkel (2), der zweite Sattelschenkel (3) und der Verbindungssteg (4) jeweils aus zumindest einem Einzelteil (15) gebildet sind, wobei der erste Sattelschenkel (2) und der zweite Sattelschenkel (3) mittels einer Schweißverbindung mit dem Verbindungssteg (4) gekoppelt sind, wobei der Verbindungssteg (4) mehrere Stegelemente (13) aufweist, welche sich zwischen dem ersten Sattelschenkel (2) und dem zweiten Sattelschenkel (3) erstrecken.

2. Bremssattel nach Anspruch 1, **dadurch gekennzeichnet, dass** der Verbindungssteg (4) einzelne Stegelemente (13) aufweist, welche sich jeweils vom ersten Sattelschenkel (2) zum zweiten Sattelschenkel (3) erstrecken, wobei die Stegelemente (13) jeweils einteilig ausgebildet sind.

3. Bremssattel nach einem der vorhergehenden Ansprüche, **dadurch gekennzeichnet, dass** die Position des ersten Sattelschenkels (2) zum Verbindungssteg (4), insbesondere zu den Stegelementen (13), durch einen Axialanschlag (33) festgelegt ist und dass die Position des zweiten Sattelschenkels (3) zum Verbindungssteg (4), insbesondere zu den Stegelementen (13), frei festgelegt ist.

4. Bremssattel nach einem der vorhergehenden Ansprüche, **dadurch gekennzeichnet, dass** zumindest eines der Einzelteile (15) des Bremssattels (1) aus einem ebenen Blechstück ausgeschnitten oder ausgestanzt ist.

5. Bremssattel nach Anspruch 4, **dadurch gekennzeichnet, dass** zumindest eines der aus einem ebenen Blechstück ausgeschnittenen oder ausgestanzten Einzelteile (15) des Bremssattels (1), umgeformt ist.

6. Bremssattel nach einem der vorhergehenden Ansprüche, **dadurch gekennzeichnet, dass** ein Mantel (7) des Kolbengehäuses (5) des ersten Sattelschenkels (2) aus einem Formrohr gefertigt ist.

7. Bremssattel nach Anspruch 6, **dadurch gekennzeichnet, dass** an einer Stirnseite des Mantels (7) des Kolbengehäuses (5) ein Verschlussdeckel (11) angeschweißt ist.

8. Bremssattel nach Anspruch 7, **dadurch gekennzeichnet, dass** der Verschlussdeckel (11) mittels einer Widerstandsschweißung am Mantel (7) angeschweißt ist.

9. Bremssattel nach einem der Ansprüche 1 bis 3, **dadurch gekennzeichnet, dass** das Kolbengehäuse (5) des ersten Sattelschenkels (2) als Tiefziehteil ausgebildet ist.

10. Bremssattel nach einem der vorhergehenden Ansprüche, **dadurch gekennzeichnet, dass** an der Mantelaußenfläche (8) des Kolbengehäuses (5) zumindest eine radial abstehende Lasche (9) angeschweißt ist.

11. Bremssattel nach einem der vorhergehenden Ansprüche, **dadurch gekennzeichnet, dass** zwischen 50% und 100%, insbesondere zwischen 70% und 100%, der mittels der Schweißverbindung miteinander gekoppelten Einzelteile (15) des Bremssattels (1) aus einem Halbzeug gebildet sind.

12. Bremssattel nach einem der vorhergehenden Ansprüche, **dadurch gekennzeichnet, dass** zumindest zwei der miteinander verschweißten Einzelteile (15) des Bremssattels (1) aus einem unterschiedlichen Werkstoff gebildet sind.

13. Bremssattel nach einem der vorhergehenden Ansprüche, **dadurch gekennzeichnet, dass** zumindest einzelne der Einzelteile (15) des Bremssattels aus einem rostfreien Stahl mit einem Chromgehalt höher 10,5% ausgebildet sind.

14. Kraftfahrzeug mit einer Scheibenbremse, welches eine Bremsscheibe und einen mit der Bremsscheibe zusammenwirkenden Bremssattel (1) aufweist, **dadurch gekennzeichnet, dass** der Bremssattel (1) nach einem der vorhergehenden Ansprüche ausgebildet ist.

15. Verfahren zum Herstellen eines Bremssattels (1) nach einem der Ansprüche 1 bis 14, **dadurch gekennzeichnet, dass** das Verfahren folgende Verfahrensschritte umfasst:
- Bereitstellen von mehreren Einzelteilen (15);
- Verschweißen der Einzelteile (15) miteinander, sodass der aus den Einzelteilen (15) zusammengeschweißte Bremssattel (1)
- einen ersten Sattelschenkel (2) mit einem Kolbengehäuse (5) zur Aufnahme eines Bremskolbens (6);
- einen zweiten Sattelschenkel (3), welcher dem ersten Sattelschenkel (2) gegenüberliegend angeordnet ist; und
- einen Verbindungssteg (4), der die beiden Sattelschenkel (2, 3) miteinander verbindet,
aufweist, **dadurch gekennzeichnet, dass** der erste Sattelschenkel (2), der zweite Sattelschenkel (3) und der Verbindungssteg (4) jeweils aus zumindest einem Einzelteil (15) gebildet sind, wobei der erste Sattelschenkel (2) und der zweite Sattelschenkel (3) mittels einer Schweißverbindung mit dem Verbindungssteg (4) gekoppelt sind, wobei der Verbindungssteg (4) mehrere Stegelemente (13) aufweist, welche sich zwischen dem ersten Sattelschenkel (2) und dem zweiten Sattelschenkel (3) erstrecken.

16. Verfahren nach Anspruch 15, **dadurch gekennzeichnet, dass** der erste Sattelschenkel (2), der zweite Sattelschenkel (3) und der Verbindungssteg (4) jeweils aus zumindest einem Einzelteil (15) gebildet sind, wobei der erste Sattelschenkel (2) und der zweite Sattelschenkel (3) in einer Spannaufnahme derart aufgenommen werden, dass deren Relativposition zueinander festgesetzt ist, und die beiden Sattelschenkel (2) anschließend mittels dem Verbindungssteg (4) miteinander verschweißt werden.

17. Verfahren nach Anspruch 15 oder 16, **dadurch gekennzeichnet, dass** einzelne Stegelemente (13) des Verbindungssteges (4), welche jeweils einteilig ausgebildet sind, an einem Axialanschlag (33) am ersten Sattelschenkel (2) angelegt und mit diesem verschweißt werden und in einem anschließenden Verfahrensschritt der zweite Sattelschenkel (3) in einem definierten Abstand axial frei verschiebbar an den Stegelementen (13) angelegt wird und mit diesen verschweißt wird.

18. Verfahren nach einem der Ansprüche 15 bis 17, **dadurch gekennzeichnet, dass** das Kolbengehäuse (5) durch Tiefziehen hergestellt wird.

19. Verfahren nach einem der Ansprüche 15 bis 16, **dadurch gekennzeichnet, dass** das Kolbengehäuse (5) vor dem Verbinden mit dem zweiten Sattelschenkel (3) einer Druckprüfung unterzogen wird.

20. Verfahren nach einem der Ansprüche 15 bis 19, **dadurch gekennzeichnet, dass** der Bremssattel (1) nach dem Verschweißen der Einzelteile (15) in ein elektrolytisches Bad getaucht wird, um die Oberfläche zu galvanisieren.

21. Verfahren nach einem der Ansprüche 15 bis 20, **dadurch gekennzeichnet, dass** der Verbindungssteg (4) aus mehreren Einzelteilen (15) zusammengeschweißt wird, welche mittels einem Trennverfahren, wie etwa Laserschneiden oder Wasserstrahlschneiden, aus einem Blech herausgeschnitten wurden.

22. Verfahren nach einem der Ansprüche 15 bis 21, **dadurch gekennzeichnet, dass** eine Schenkelplatte (12) des zweiten Sattelschenkels (3) mittels einem Trennverfahren aus einem Blechstück ausgeschnitten wird.

23. Verfahren nach einem der Ansprüche 15 bis 22, **dadurch gekennzeichnet, dass** der Bremskolben (6) vor dem Verschweißen des Kolbengehäuses (5) mit den restlichen Einzelteilen (15) in das Kolbengehäuse (5) eingesetzt wird.

## Claims

1. A brake caliper (1) for a disk brake, the brake caliper (1) comprising:
- a first caliper limb (2) with a piston housing (5) for accommodating a brake piston (6);
- a second caliper limb (3), which is arranged opposite the first caliper limb (2);
- a connecting web (4), which connects the two caliper limbs (2, 3) to one another, wherein the brake caliper (1) comprises multiple components (15), which are coupled to one another by means of a welding connection, **characterized in that** the first caliper limb (2), the second caliper limb (3) and the connecting web (4) are each formed of at least one component (15), wherein the first caliper limb (2) and the second caliper limb (3) are coupled to the connecting web (4) by means of a welding connection, wherein the connecting web (4) comprises multiple web elements (13), which extend between the first caliper limb (2) and the second caliper limb (3).

2. The brake caliper according to claim 1, **characterized in that** the connecting web (4) comprises individual web elements (13), each extending from the first caliper limb (2) to the second caliper limb (3), wherein the web elements (13) are each formed in one piece.

3. The brake caliper according to one of the preceding claims, **characterized in that** the position of the first caliper limb (2) relative to the connecting web (4), in particular relative to the web elements (13), is defined by an axial stop (33), and that the position of the second caliper limb (3) relative to the connecting web (4), in particular relative to the web elements (13) is defined freely.

4. The brake caliper according to one of the preceding claims, **characterized in that** at least one of the components (15) of the brake caliper (1) is cut out or stamped out of a flat piece of sheet metal.

5. The brake caliper according to claim 4, **characterized in that** at least one of the components (15) of the brake caliper (1) cut out or stamped out of a flat piece of sheet metal is reshaped.

6. The brake caliper according to one of the preceding claims, **characterized in that** a casing (7) of the piston housing (5) of the first caliper limb (2) is made from a shaped pipe.

7. The brake caliper according to claim 6, **characterized in that** a closing cover (11) is welded onto a front side of the casing (7) of the piston housing (5).

8. The brake caliper according to claim 7, **characterized in that** the closing cover (11) is welded onto the casing (7) by means of a resistance welding operation.

9. The brake caliper according to one of claims 1 to 3, **characterized in that** the piston housing (5) of the first caliper limb (2) is designed as a deep-drawing part.

10. The brake caliper according to one of the preceding claims, **characterized in that** at least one radially projecting lug (9) is welded onto the casing outer surface (8) of the piston housing (5).

11. The brake caliper according to one of the preceding claims, **characterized in that** between 50% and 100%, in particular between 70% and 100%, of the components (15) of the brake caliper (1) coupled to one another by means of the welding connection are made from a semi-finished product.

12. The brake caliper according to one of the preceding claims, **characterized in that** at least two of components (15) of the brake caliper (1), which are welded together, are made from different materials.

13. The brake caliper according to one of the preceding claims, **characterized in that** at least individual components (15) of the brake caliper are formed of a stainless steel having a chromium content of more than 10.5%.

14. A motor vehicle with a disk brake, which comprises a brake disk and a brake caliper (1) cooperating with the brake disk, **characterized in that** the brake caliper (1) is formed according to one of the preceding claims.

15. A method for producing a brake caliper (1) according to one of claims 1 to 14, **characterized in that** the method comprises the following method steps:
- providing multiple components (15);
- welding the components (15) together, so that the brake caliper (1) welded together from the components (15) comprises
- a first caliper limb (2) with a piston housing (5) for accommodating a brake piston (6);
- a second caliper limb (3), which is arranged opposite the first caliper limb (2); and
- a connecting web (4), which connects the two caliper limbs (2, 3) to one another, **characterized in that** the first caliper limb (2), the second caliper limb (3) and the connecting web (4) are each formed of at least one component (15), wherein the first caliper limb (2) and the second caliper limb (3) are coupled to the connecting web (4) by means of a welding connection, wherein the connecting web (4) comprises multiple web elements (13), which extend between the first caliper limb (2) and the second caliper limb (3).

16. The method according to claim 15, **characterized in that** the first caliper limb (2), the second caliper limb (3) and the connecting web (4) are each formed of at least one component (15), wherein the first caliper limb (2) and the second caliper limb (3) are accommodated in a clamping holder, such that their relative position to one another is fixed, and the two caliper limbs (2) are subsequently welded together by means of the connecting web (4).

17. The method according to claim 15 or 16, **characterized in that** individual web elements (13) of the connecting web (4), which are each formed in one piece, are placed on an axial stop (33) on the first caliper limb (2) and are welded to said axial stop (33), and in a subsequent method step, the second caliper limb (3) is placed on the web elements (13) so as to be axially freely displaceable within a defined distance and is welded to said web elements (13).

18. The method according to one of claims 15 to 17, **characterized in that** the piston housing (5) is produced by means of deep-drawing.

19. The method according to one of claims 15 to 16, **characterized in that** the piston housing (5) is subjected to a pressure test before being joined to the second caliper limb (3).

20. The method according to one of claims 15 to 19, **characterized in that** the brake caliper (1) is immersed in an electrolytic bath after the components (15) have been welded together, in order to galvanize the surface.

21. The method according to one of claims 15 to 20, **characterized in that** the connecting web (4) is welded together from multiple components (15), which were cut out of a sheet metal by means of a separation method, such as laser cutting or water jet cutting.

22. The method according to one of claims 15 to 21, **characterized in that** a limb plate (12) of the second caliper limb (3) was cut out of a piece of sheet metal by means of a separation method.

23. The method according to one of claims 15 to 22, **characterized in that** the brake piston (6) is inserted into the piston housing (5) along with the remaining components (15) before the piston housing (5) is welded.

## Revendications

1. Étrier de frein (1) pour un frein à disque, cet étrier de frein (1) comprenant :
- une première branche d'étrier (2) avec un carter de piston (5) pour le logement d'un piston de frein (6) ;
- une deuxième branche d'étrier (3), qui est disposée en face de la première branche d'étrier (2) ;
- une barre de liaison (4) qui relie entre elles les deux branches d'étrier (2, 3), dans lequel l'étrier de frein (1) comprend plusieurs pièces détachées (15), qui sont couplées entre elles au moyen d'une liaison par soudure, **caractérisé en ce que** la première branche d'étrier (2), la deuxième branche d'étrier (3) et la barre de liaison (4) sont constituées chacune d'au moins une pièce détachée (15), dans lequel la première branche d'étrier (2) et la deuxième branche d'étrier (3) sont couplées au moyen d'une liaison par soudure avec la barre de liaison (4), dans lequel la barre de liaison (4) comprend plusieurs éléments de barre (13) qui s'étendent entre la première branche d'étrier (2) et la deuxième branche d'étrier (3).

2. Étrier de frein selon la revendication 1, **caractérisé en ce que** la barre de liaison (4) comprend des éléments de barre (13) séparés qui s'étendent chacun de la première branche d'étrier (2) vers la deuxième branche d'étrier (3), dans lequel les éléments de barre (13) sont réalisés chacun d'une seule pièce.

3. Étrier de frein selon l'une des revendications précédentes, **caractérisé en ce que** la position de la première branche d'étrier (2) par rapport à la barre de liaison (4), plus particulièrement par rapport aux éléments de barre (13), est définie par une butée axiale (33) et **en ce que** la position de la deuxième branche d'étrier (3) par rapport à la barre de liaison (4), plus particulièrement par rapport aux éléments de barre (13), est définie librement.

4. Étrier de frein selon l'une des revendications précédentes, **caractérisé en ce qu'**au moins une des pièces détachées (15) de l'étrier de frein (1) est découpée ou estampée dans une pièce de tôle plane.

5. Étrier de frein selon la revendication 4, **caractérisé en ce qu'**au moins une des pièces détachées (15), découpée ou estampée dans une pièce de tôle plane, de l'étrier de frein (1) est façonnée.

6. Étrier de frein selon l'une des revendications précédentes, **caractérisé en ce qu'**une enveloppe (7) du carter de piston (5) de la première branche d'étrier (2) est constitué d'un tube formé.

7. Étrier de frein selon la revendication 6, **caractérisé en ce que**, sur une face frontale de l'enveloppe (7) du carter de piston (5) est soudé un couvercle de fermeture (11).

8. Étrier de frein selon la revendication 7, **caractérisé en ce que** le couvercle de fermeture (11) est soudé à l'enveloppe (7) au moyen d'une soudure par résistance.

9. Étrier de frein selon l'une des revendications 1 à 3, **caractérisé en ce que** le carter de piston (5) de la première branche d'étrier (2) est réalisé comme une pièce emboutie.

10. Étrier de frein selon l'une des revendications précédentes, **caractérisé en ce que**, sur la surface externe d'enveloppe (8) du carter de piston (5), est soudée une patte (9) s'écartant axialement.

11. Étrier de frein selon l'une des revendications précédentes, **caractérisé en ce que**, entre 50 % et 100 %, plus particulièrement entre 70 % et 100 % des pièces détachées (15), couplées entre elles au moyen de la liaison par soudure, de l'étrier de frein (1), sont constituées d'un produit semi-fini.

12. Étrier de frein selon l'une des revendications précédentes, **caractérisé en ce qu'**au moins deux des pièces détachées (15), soudées entre elles, de l'étrier de frein (1) sont constituées de matériaux différents.

13. Étrier de frein selon l'une des revendications précédentes, **caractérisé en ce qu'**au moins certaines des pièces détachées (15) de l'étrier de frein sont constituées d'un acier inoxydable avec une teneur en chrome supérieure à 10,5 %.

14. Véhicule automobile avec un frein à disque, qui comprend un disque de frein et un étrier de frein (1) interagissant avec le disque de frein, **caractérisé en ce que** l'étrier de frein (1) est réalisé selon l'une des revendications précédentes.

15. Procédé de fabrication d'un étrier de frein (1) selon l'une des revendications 1 à 14, **caractérisé en ce que** le procédé comprend les étapes suivantes :
- mise à disposition de plusieurs pièces détachées (15) ;
- soudure des pièces détachées (15) entre elles, de façon à ce que l'étrier de frein (1) constitué des pièces détachées (15) comprenne
- une première branche d'étrier (2) avec un carter de piston (5) pour le logement d'un piston de frein (6) ;
- une deuxième branche d'étrier (3) qui est disposée en face de la première branche d'étrier (2) ;
- une barre de liaison (4) qui relie les deux branches d'étrier (2, 3) entre elles, **caractérisé en ce que** la première branche d'étrier (2), la deuxième branche d'étrier (3) et la barre de liaison (4) sont constituées chacune d'au moins une pièce détachée (15), dans lequel la première branche d'étrier (2) et la deuxième branche d'étrier (3) sont couplées au moyen d'une liaison par soudure avec la barre de liaison (4), dans lequel la barre de liaison (4) comprend plusieurs éléments de barre (13) qui s'étendent entre la première branche d'étrier (2) et la deuxième branche d'étrier (3).

16. Procédé selon la revendication 15, **caractérisé en ce que** la première branche d'étrier (2), la deuxième branche d'étrier (3) et la barre de liaison (4) sont constituées chacune d'au moins une pièce détachée (15), dans lequel la première branche d'étrier (2) et la deuxième branche d'étrier (3) sont logées dans un logement à serrage de façon à ce que leur position relative soit définie et les deux branches d'étrier (2) sont ensuite soudées entre elles au moyen de la barre de liaison (4).

17. Procédé selon la revendication 15 ou 16, **caractérisé en ce que** certains éléments de barre (13) de la barre de liaison (4), qui sont constitués chacun d'une seule pièce, sont appuyés contre une butée axiale (33) sur la première branche d'étrier (2) et soudées avec celle-ci et, dans une étape suivante, la deuxième branche d'étrier (3) est appuyée de manière librement coulissante axialement à une distance définie contre les éléments de barre (13) et soudée avec ceux-ci.

18. Procédé selon l'une des revendications 15 à 17, **caractérisé en ce que** le carter de piston (5) est fabriqué par emboutissage.

19. Procédé selon l'une des revendications 15 à 16, **caractérisé en ce que** le carter de piston (5) est soumis, avant la liaison avec la deuxième branche d'étrier (3), à un contrôle d'essai.

20. Procédé selon l'une des revendications 15 à 19, **caractérisé en ce que** l'étrier de frein (1) est plongé, après la soudure des pièces détachées (15), dans un bain électrolytique, afin de galvaniser la surface.

21. Procédé selon l'une des revendications 15 à 20, **caractérisé en ce que** la barre de liaison (4) est assemblée par soudure à partir de plusieurs pièces détachées (15), qui ont été découpées, au moyen d'un procédé de séparation, comme une découpe au laser ou par jet d'eau, dans une tôle.

22. Procédé selon l'une des revendications 15 à 21, **caractérisé en ce qu'**une plaque de branche (12) de la deuxième branche d'étrier (3) est découpée au moyen d'un procédé de séparation dans une pièce de tôle.

23. Procédé selon l'une des revendications 15 à 22, **caractérisé en ce que** le piston de frein (6) est inséré, avant la soudure du carter de piston (5), avec les autres pièces détachées (15), dans le carter de piston (5).
